# EUROPEAN PATENT SPECIFICATION

(11) **EP 2 574 517 B1**
(45) Date of publication and mention of the grant of the patent: **16.08.2017**
(21) Application number: 12186028.2
(22) Date of filing: 26.09.2012
(51) Int. Cl.: B60W 50/04, B60W 50/14, B60K 35/00, G07C 5/00, G07C 5/08

(54) **Vehicle control device, vehicle information monitoring device, vehicle information monitoring system, and vehicle control method**
Fahrzeugsteuerungsvorrichtung, Fahrzeuginformationsüberwachungsvorrichtung, Fahrzeuginformationsüberwachungssystem und Fahrzeugsteuerungsverfahren
Dispositif de commande de véhicule, dispositif de surveillance d'informations de véhicule, système de surveillance d'informations de véhicule et procédé de commande de véhicule

(30) Priority: 27.09.2011 JP 2011211387
(43) Date of publication of application: 03.04.2013
(73) Proprietor: Yamaha Hatsudoki Kabushiki Kaisha, Iwata-shi, Shizuoka 438-8501 (JP)
(72) Inventor: Itoh, Sachio, Iwata-shi, Shizuoka 438-8501 (JP)
(74) Representative: Grünecker Patent- und Rechtsanwälte PartG mbB

(56) References cited:
- WO-A2-2008/063818
- JP-A- 2002 228 551
- JP-A- 2002 331 882
- US-A1- 2009 112 398

## Description

The present invention relates to a vehicle control device, a vehicle information monitoring device for obtaining vehicle information from the vehicle control device, a vehicle information monitoring system, and a vehicle control method.

A vehicle includes a display unit that displays vehicle information suchas a vehicle speed and a vehicle control unit for controlling respective sections (mainly, electrical components) of the vehicle. The vehicle control unit controls, for example, the operation of electrical components such as an ignition plug and fuel injector included in a vehicle engine. Sensors necessary for such a control operation are connected to the vehicle control unit. The sensors include, for example, a vehicle speed sensor, an engine speed sensor, a coolant sensor, an intake temperature sensor, and a throttle opening degree sensor.

The display unit is arranged so as to obtain necessary information by communication with the vehicle control unit. For example, the display unit is arranged so as to obtain information such as a vehicle speed, an engine speed, and a coolant temperature from the vehicle control unit and display the information.

Japanese Published Unexamined Patent Application No. 2000-266642 (referredtoas "JP' 642" hereinafter) discloses a fault diagnosis tool to be connected to an engine controller. The fault diagnosis tool provides an obtaining request for engine related data to the engine controller. In response to the obtaining request, the engine controller sends values of various parameters such as an engine speed and a vehicle speed back to the fault diagnosis tool. The fault diagnosis tool has a physical quantity conversion information storage section storing physical quantity conversion formulas stored in advance for each parameter. The fault diagnosis tool converts a parameter received from the engine controller to a value that matches an actual physical quantity (an engine speed, a vehicle speed, or the like) in accordance with the physical quantity conversion formula stored in the physical quantity conversion information storage section. The physical quantity conversion information storage section is provided inside of a memory cartridge that is detachably attached to the fault diagnosis tool.

The vehicle control unit includes a memory that stores vehicle information and a communication port for reading out vehicle information from the memory in some cases. By reading out vehicle information stored in the memory via the communication port, a fault diagnosis of the vehicle can be performed.

Further prior art is known from JP 2002 331882 A which shows the features of the preamble of claim 1.

As disclosed in JP '642, vehicle information to be output by a vehicle control device such as an engine controller is not information that can be used as it is, but needs to be converted in accordance with a conversion rule such as a physical quantity conversion formula. However, the conversion rules are different, for example, for each type of vehicle, and thus it is necessary that another device for obtaining vehicle information by communication with a vehicle control device has conversion rules adopted in the vehicle control device in common. A dedicated device that is mounted on a vehicle together with a vehicle control device and communicates with the vehicle control device, of course, has such conversion rules in common. Moreover, also in a vehicle information monitoring device that monitors vehicle information by communicating with a vehicle control device, the same conversion rules as those in the vehicle control device must be held in common. If it is intended to design a vehicle information monitoring device so as to be used in common for a plurality of types of vehicles, a conversion rule table that stores the names of the plurality of types of vehicles and a plurality of corresponding conversion rules must be included in the vehicle information monitoring device. This means that the conversion rule table must be updated when a new type of vehicle is developed. Therefore, a great amount of labor is required for preparing an updated conversion rule table, and a greater amount of labor is required for writing the updated conversion rule table in the vehicle information monitoring device.

It is an object of the present invention to provide a vehicle control device, a vehicle information monitoring device, a vehicle information monitoring system, and a vehicle control method that can be adapted to several vehicles in an easy manner. According to the present invention said object is solved by a vehicle control device having the features of claim 1, a vehicle information monitoring device having the features of claim 3, a vehicle information monitoring system having the features of claim 5 or 6, and a vehicle control method having the features of claim 9. Preferred embodiments are laid down in the dependent claims.

Accordingly, it is provided a vehicle control device including a communication unit for communication with an external communication target, a response data transmission control unit that, in response to a request code to request vehicle information being received by the communication unit, transmits response data including vehicle information corresponding to the request code from the communication unit, and characterized in that the vehicle control device includes a conversion rule transmission control unit that, in response to a conversion rule request requesting a conversion rule to convert vehicle information being received by the communication unit, transmits a conversion rule corresponding to the conversion rule request from the communication unit.

The vehicle control device is arranged so as to respond to a request code to request vehicle information. That is, when a request code is received by the communication unit, a response code including vehicle information corresponding to the request code is transmitted from the communication unit. Furthermore, the vehicle control device is arranged so as to respond to a conversion rule request requesting a conversion rule to convert vehicle information. That is, when a conversion rule request is received by the communication unit, a conversion rule corresponding to the request is transmitted from the communication unit. Therefore, another external device that communicates with the vehicle control device via a communication unit, that is, a communication target, can obtain a conversion rule by providing a conversion rule request to the vehicle control device, and further, by providing a request code to the vehicle control unit device, can obtain vehicle information included in a response code from the vehicle control device. Hence, the other device can convert vehicle information by a correct conversion rule.

Due to such an arrangement, it is not necessary for another device that communicates with a vehicle control device to have in advance the same conversion rule as that of the vehicle control device. Hence, even when a plurality of vehicle control devices respectively corresponding to a plurality of types of vehicles respectively output vehicle information different in conversion rules in common, it is not necessary for the other device to include a conversion rule table that stores type-by-type conversion rules of vehicles, and of course, it is not necessary to update the conversion rule table. More specifically, vehicle information output by the vehicle control devices of a plurality of types of vehicles can be obtained by the device of the same specifications.

The vehicle information is information that the vehicle control device can hold internally. Examples of the vehicle information that can be mentioned include a motor rotation speed, a vehicle speed, a coolant temperature, an intake air temperature, a throttle opening degree, a gear position, and a remaining fuel amount. The vehicle information may include sensor output information output by sensors mounted on the vehicle. Examples of the sensor output information include a motor rotation speed, a vehicle speed, a coolant temperature, an intake air temperature, a throttle opening degree, a gear position, and a remaining fuel amount. Moreover, the vehicle information may include calculation information prepared by internal calculation of the vehicle control device. Examples of the calculation information that can be mentioned include a control command such as a fuel injection amount (fuel injection time) and various warnings. Depending on the vehicle configuration, the gear position can also be an example of control command information. The motor of the vehicle may be either an internal combustion engine or an electric motor.

The coolant temperature is the temperature of a coolant to cool an engine, which is an example of the motor. The intake air temperature is the temperature of air to be taken in an engine, and can be used as an alternative indicator of an environmental temperature. The warning is information to notify an abnormality such as a fault. The gear position is information indicating the gear position of a transmission included in the vehicle.

As described above, there are a plurality of types of vehicle information. The request code may be a code that specifies the type of vehicle information and requests transmission thereof.

The vehicle control device may be arranged, for example, so as to control electrical components included in the vehicle. The electrical components include electrical components related to an engine as an example of the motor. Specific examples of such electrical components include components related to driving of an engine, such as an ignition plug (ignition coil), a fuel injector, and a fuel pump. The vehicle control device is input with output signals of sensors. Specific examples of the sensors include a vehicle speed sensor, an engine speed sensor, a coolant temperature sensor, and an intake air temperature sensor. The engine speed sensor includes, for example, a crank angle sensor that detects the rotation angle of a crankshaft of the engine.

Moreover, examples of the conversion rule include not only a conversion parameter such as a resolution but also a conversion rule specifying code to specify a conversion rule like a resolution specifying code to specify a resolution and a conversion formula specifying code to specify a conversion formula. The resolution is an actual physical quantity expressed by the minimum unit of certain vehicle information. For example, a motor rotation speed is taken as an example of the vehicle information, and it is assumed that the vehicle control device outputs the motor rotation speed as 1 byte (0∼255) of data. In this case, if the resolution is "30 (rpm)," for example, motor rotation speed data "100" means 3000 (=100×30) rpm. That is, there is a conversion formula "motor rotation speed data × resolution," and one (conversion parameter) of the parameters of the conversion formula is the resolution. The resolution specifying code is a code (e.g. a number), for which a plurality of types of selectable resolutions are predetermined, for selecting and specifying one of the predetermined resolutions. Similarly, the conversion formula specifying code is a code (e. g. a number), for which a plurality of types of selectable conversion formulas are predetermined, for selecting and specifying one of the predetermined conversion formulas.

The conversion rule may be a rule for converting the form of vehicle information that is handled inside of the vehicle control device and is output from the communication unit to another form that allows handling in an external communication target. In this case, vehicle inf ormationbef ore conversion by the conversion rule and vehicle information after the conversion are different in form, but express, for example, the same physical quantity.

In a preferred embodiment of the present invention, the communication unit includes a communication port for communicating with a vehicle information display device that displays vehicle information. According to this arrangement, information can be obtained from the vehicle control device by using the communication port to connect a vehicle information display device. For example, vehicle information from the vehicle control device can be obtained by connecting a vehicle information monitoring device to the communication port. For example, there is a strict limit to the size of a vehicle control device of a saddle type vehicle such as a two-wheeled motor vehicle because of limitation in mounting space. For this reason, there is no allowance for including a dedicated communication port for a fault diagnosis etc. Therefore, as a result of being able to use the communication port for the vehicle information display device also for a fault diagnosis etc., an increase in size of the vehicle control device can be avoided, while a fault diagnosis function can be added.

A preferred embodiment of the present invention provides a vehicle information monitoring device for obtaining vehicle information from the vehicle control device as described above, and includes a first communication unit that communicates with the communication unit of the vehicle control device, a request code transmission control unit that causes the first communication unit to transmit a request code to request vehicle information, a conversion rule request transmission control unit that causes the first communication unit to transmit a conversion rule request requesting a conversion rule for vehicle information, a response code reception control unit that receives from the vehicle control device a response code corresponding to the request code by the first communication unit, a conversion rule reception control unit that receives from the vehicle control device a conversion rule corresponding to the conversion rule request by the first communication unit, and a converter unit that converts vehicle information included in a response code received by the response code reception control unit in accordance with a conversion rule received by the conversion rule reception control unit.

According to this arrangement, the vehicle information monitoring device obtains vehicle information by providing a request code to the vehicle control device and receiving a response code transmitted from the vehicle control device in response thereto. Moreover, the vehicle information monitoring device provides a conversion rule request to the vehicle control device, and obtains a conversion rule sent from the vehicle control device in response thereto. Then, the vehicle information monitoring device converts the vehicle information included in the response code in accordance with the conversion rule, and thereby obtains vehicle information after conversion (an actual physical amount). Due to such an arrangement, the vehicle information monitoring device can convert vehicle information by a correct conversion rule without having in advance the same conversion rule as that of the vehicle control device in common. Hence, even when a plurality of vehicle control devices respectively output vehicle information different in conversion rules, it is not necessary for the vehicle information monitoring device to include a conversion rule table that stores type-by-type conversion rules of vehicles, and of course, it is not necessary to update the conversion rule table. That is, vehicle information output by the vehicle control devices of a plurality of types of vehicles can be monitored by the vehicle information monitoring device of the same specifications.

In a preferred embodiment of the present invention, the vehicle information monitoring device further includes a second communication unit that communicates with a vehicle information display device for displaying vehicle information by communicating with the communication unit of the vehicle control device, and a response code transmission control unit that causes the second communication unit to transmit a response code when a response code is received by the response code reception control unit, and the response code transmission control unit is arranged so as to cause the first communication unit to transmit a request code when the second communication unit receives a request code.

The vehicle information display device, when this is connected to the vehicle control device, can obtain vehicle information by communication with the vehicle control device. Specifically, the vehicle information display device generates a request code to request necessary information. The vehicle control device, upon receiving the request code, generates response data (including vehicle information) corresponding to the request code. The vehicle information display device, by use of the vehicle information included in the response data, performs a necessary display.

The vehicle information monitoring device is arranged so as to communicate with the vehicle control device by the first communication unit and communicate with the vehicle information display device by the second communication unit. Therefore, the vehicle information monitoring device can relay communication between the vehicle information display device and the vehicle control device. That is, the vehicle information monitoring device can transmit a request code received from the vehicle information display device to the vehicle control device, receive response data for the request code from the vehicle control device, and transmit the response data to the vehicle information display device. Accordingly, the vehicle information monitoring device can provide necessary information for the vehicle information display device, and can monitor vehicle information. That is, the vehicle information monitoring device can sustain a display operation in the vehicle information display device, while monitoring vehicle information.

The vehicle information to be displayed by the vehicle information display device includes, for example, one or more of the vehicle speed, motor rotation speed, coolant temperature, intake air temperature, warning, gear position, and remaining fuel amount. That is, the vehicle information display device may be supplied with the information by the vehicle control device. It is preferable that the vehicle information to be displayed by the vehicle information display device includes at least the foregoing sensor output information. More specifically, it is preferable that the vehicle information to be displayed by the vehicle information display device includes at least the vehicle speed and motor rotation speed.

A preferred embodiment of the present invention provides a vehicle information monitoring system including the vehicle control device and vehicle information monitoring device as described above.

Moreover, a preferred embodiment of the present invention provides a vehicle information monitoring system including the vehicle control device as described above, the vehicle information monitoring device as described above, and a vehicle information display device that communicates with the second communication unit.

In a preferred embodiment of the present invention, the vehicle control device and the vehicle information display device are arranged so as to be able to be connected by a wired communication line having halfway a first connector and a second connector that can couple with each other, the first connector is connected to the vehicle control device, and the second connector is connected to the vehicle information display device, and the first communication unit includes a first connecting portion to be connected to the first connector, and the second communication unit includes a second connecting portion to be connected to the second connector.

According to this arrangement, the vehicle control device and the vehicle information display device are connected by a wired communication line, and a first connector and a second connector that can couple with each other are provided halfway on the wired communication line. In a normal use state of the vehicle , the first connector and the second connector are coupled, and the vehicle control device and the vehicle information display device carry out information communication directly. When obtaining vehicle information, coupling between the first connector and the second connector is released, and the first connector and the second connector are connected to the first connecting portion and the second connecting portion of the vehicle information monitoring device, respectively. Accordingly, the vehicle control device and the vehicle information display device can be relayed by the vehicle information monitoring device, while communicating with each other. In other words, the vehicle information monitoring device respectively communicates with the vehicle control device and the vehicle information display device. By thus releasing coupling between the first connector and the second connector and connecting the first and second connectors to the vehicle information monitoring device, vehicle information can be easily obtained. In a normal use state, because it is not necessary to keep the vehicle information monitoring device connected, it is not necessary to secure a space to place the vehicle information monitoring device in the vehicle.

The "halfway on the wired communication line" means any position from one end to the other end of the wired communication line. That is, an intermediate portion, a one-end portion, and an other-end portion of a wired communication line are all covered by the "halfway on the wired communication line."

In a preferred embodiment of the present invention, the vehicle information monitoring device relays a request code and response data between the vehicle control device and the vehicle information display device.

According to this arrangement, the vehicle information monitoring device can cause the vehicle control device and the vehicle information display device to perform communication therebetween by relaying therebetween, while obtaining vehicle information. Therefore, vehicle information can be obtained in a driving state of the vehicle.

The above and other objects, features, and advantages of the present invention will become apparent through the following description of preferred embodiments with reference to the accompanying drawings.

### BRIEF DESCRIPTION OF THE DRAWINGS

FIG. 1 is a block diagram for explaining an electrical configuration of a vehicle to which a vehicle information monitoring device according to a preferred embodiment of the present invention is applicable, and shows a normal use state of a vehicle.
FIG. 2 is a block diagram for explaining a configuration of the vehicle information monitoring device according to the preferred embodiment of the present invention, and shows a configuration when obtaining vehicle information.
FIG. 3 is a block diagram for explaining a functional conf iguration of a vehicle control unit and a vehicle information monitoring device.
FIG. 4 is a view showing examples of data that appear on a wired communication line in the normal use state (refer to FIG. 1) of a vehicle.
FIG. 5 is a view showing a communication timing between a display unit and a vehicle control unit in the normal use state (refer to FIG. 1) of a vehicle.
FIG. 6A and FIG. 6B are views for explaining a communication procedure when the vehicle information monitoring device is connected between the display unit and the vehicle control unit (refer to FIG. 2).
FIG. 7A is a timing chart showing a communication timing corresponding to the communication procedure of FIG. 6A.
FIG. 7B is a timing chart showing a communication timing corresponding to the communication procedure of FIG. 6B.

### DETAILED DESCRIPTION OF THE PREFERRED EMBODIMENTS

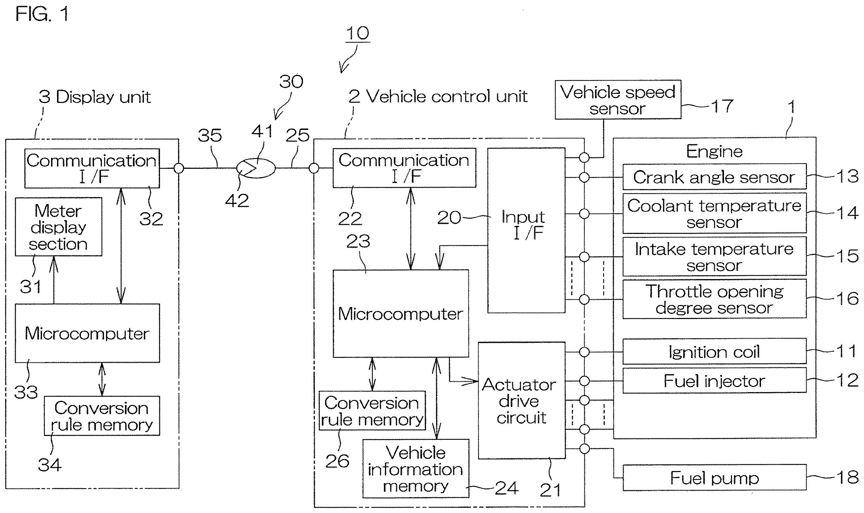

FIG. 1 is a block diagram for explaining an electrical configuration of a vehicle to which a preferred embodiment of the present invention can be applied. The vehicle 10 includes an engine 1, a vehicle control unit 2 as an example of a vehicle control device, and a display unit 3 as an example of a vehicle information display device. The vehicle control unit 2 is programmed so as to control the operation of electrical components related to the vehicle 10. More specifically, the vehicle control unit 2 is mounted on the vehicle 10, and controls the operation of electrical components included in the engine 1 and electrical components related to the engine 1. The engine 1, in the present preferred embodiment, is an internal combustion engine. In the engine 1, an ignition coil 11 and a fuel injector 12 are included as electrical components. The ignition coil 11 is arranged so as to apply a high voltage to discharge an ignition plug to the ignition plug. The ignition plug includes a discharging section that discharges inside a combustion chamber of the engine 1. The fuel injector 12 is a device that injects fuel toward an intake port of the engine 1. A fuel pump 18 for supplying fuel to the fuel injector 12 is also one of the electrical components related to the engine 1. The operation of the fuel pump 18 is also controlled by the vehicle control unit 2.

The engine 1 further includes a crank angle sensor 13, a coolant temperature sensor 14 , an intake temperature sensor 15, and a throttle opening degree sensor 16. The crank angle sensor 13 is arranged so as to detect the rotation angle of a crankshaft of the engine 1. The coolant temperature sensor 14 is arranged so as to detect the temperature of a coolant for cooling the engine 1. The intake temperature sensor 15 is arranged so as to detect the temperature of air (intake air) to be taken in the engine 1. The throttle opening degree sensor 16 is arranged so as to detect the opening degree of a throttle valve included in the engine 1. Output signals of the sensors 13, 14, 15, and 16 are input to the vehicle control unit 2.

To the vehicle control unit 2, further, a vehicle speed sensor 17 that detects the traveling speed (vehicle speed) of the vehicle 10 is connected. The vehicle control unit 2 further includes an input interface 20 to which detection signals from the sensors 13 to 17 are input. The vehicle control unit 2 includes an actuator drive circuit 21 for driving electrical components (actuators) included in the engine 1 and electrical components (actuators, e.g. a fuel pump) included in parts other than the engine 1 of the vehicle 10. The vehicle control unit 2 further includes a communication interface 22 serving as communication units, a microcomputer 23, a vehicle information memory 24, and a conversion rule memory 26.

The communication interface 22 is arranged so as to perform give/receive of commands and data with a communication cable 25, and provides a communication port for communicating with the display unit 3. The microcomputer 23 is programmed so as to control the actuator drive circuit 21 according to output signals etc., of the sensors input to the input interface 20. The vehicle information memory 24 is arranged so as to hold, for example, output signals of the sensors input to the input interface 20 anda control history of electrical components by the actuator drive circuit 21 as vehicle information (vehicle control information). More specifically, there is an arrangement so that the microcomputer 23 writes the vehicle information in the vehicle information memory 24. The microcomputer 23 is also programmed so as to, according to a request code received by the communication interface 22, read necessary vehicle information out of the vehicle information memory 24, and send out response data including the vehicle information to the communication cable 25.

The conversion rule memory 26 stores a conversion rule for the vehicle control unit 2 converting vehicle information transmitted by the vehicle control unit 2 from the communication interface 22 into an actual physical quantity. The "actual physical quantity" herein means a physical quantity expressed in a form of expression that a human being ordinarily understands. More specifically, an engine speed resolution and a vehicle speed resolution corresponding to engine speed data and a vehicle speed transmitted by the vehicle control unit 2 from the communication interface 22, respectively, are stored as conversion rules in the conversion rule memory 26. The engine speed resolution is an actual physical quantity expressed by the minimum unit of engine speed data. For example, it is assumed that the engine speed data is 1 byte (0∼255) of data. Inthiscase, iftheresolutionis"30 (rpm)," for example, engine speed data "100" means 3000 (=100×30) rpm. That is, there is a conversion formula "engine speed data × engine speed resolution," and one (conversion parameter) of the parameters of the conversion formula is the engine speed resolution. Similarly, the vehicle speed resolution is an actual physical quantity expressed by the minimum unit of vehicle speed data. For example, it is assumed that the vehicle speed data is 1 byte (0∼255) of data. In this case, if the resolution is "0.5 (km/h)," for example, vehicle speed data "100" means 50 (=100×0.5) km/h. That is, there is a conversion formula "vehicle speed data × vehicle speed resolution," and one (conversion parameter) of the parameters of the conversion formula is the vehicle speed resolution.

As described above, the vehicle information transmitted by the vehicle control unit 2 from the communication interface 22 is expressed in a form different from that a human being ordinarily understands. However, the value before conversion by a conversion rule and the value after the conversion are different in the form of expression, but express the same physical quantity. That is, the "actual physical quantity" obtained by converting vehicle information by a conversion rule is vehicle information converted in the form of expression. In the present preferred embodiment, an example of converting vehicle information into a form that a human being ordinarily understands is mentioned, but it is sometimes appropriate to convert vehicle information into another form of expression. For example, the conversion rule may indicate a rule to convert a predetermined length of data that is handled inside the vehicle control unit 2 and output from the communication interface 22 into a longer length of data (data long enough to be made into a form that a human being can understand).

The microcomputer 23 is programmed so as to, according to a packet including a conversion rule request received by the communication interface 22 , read a corresponding conversion rule out of the conversion rule memory 26, and send out a packet including the conversion rule to the communication cable 25.

To the distal end of the communication cable 25, a first connector (coupler) 41 is coupled.

The display unit 3 is connected to a communication cable 35. To the distal end of the communication cable 35, a second connector (coupler) 42 is coupled. The first connector 41 and the second connector 42 are arranged so as to be capable of coupling with each other and releasing the coupling.

The display unit 3 is mounted on the vehicle 10, and includes a meter display section 31, a communication interface 32, a microcomputer 33, and a conversion rule memory 34. In the conversion rule memory 34, the same conversion rule as that in the conversion rule memory 26 of the vehicle control unit 2 is stored. The meter display section 31 is arranged so as to be capable of displaying, for example, a vehicle speed, an engine speed, a warning, a coolant temperature, and an intake air temperature. The information to be displayed is obtained from the vehicle control unit 2, via a wired communication line 30 including the communication cables 25 and 35, by the communication interface 32. The microcomputer 33 is programmed so as to send out, from the communication interface 32 to the communication cable 35, a request code to request vehicle information necessary for a display. Further, the microcomputer 33 is arranged so as to extract vehicle information from a response code received by the communication interface 32 from the communication cable 35. The microcomputer 33 is further programmed so as to control the meter display section 31 in order to cause the meter display section 31 to display the extracted vehicle information.

The microcomputer 33, upon obtaining engine speed data by the communication interface 32, reads an engine speed resolution out of the conversion rule memory 34 , and multiplies the engine speed data by the engine speed resolution to determine an engine speed. The microcomputer 33 then provides an engine speed display control signal according to the determined engine speed to the meter display section 31. Similarly, the microcomputer 33, upon obtaining vehicle speed data by the communication interface 32, reads a vehicle speed resolution out of the conversion rule memory 34 , and multiplies the vehicle speed data by the vehicle speed resolution to determine a vehicle speed. The microcomputer 33 3 then provides a vehicle speed display control signal according to the determined vehicle speed to the meter display section 31.

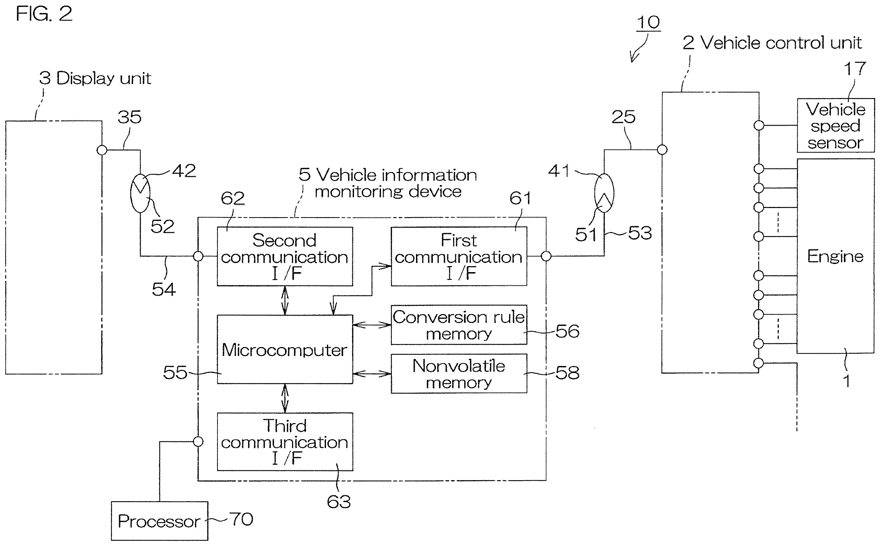

FIG. 2 is a block diagram for explaining the configuration of a vehicle information monitoring device 5. The vehicle information monitoring device 5 is arranged so as to be connected between the vehicle control unit 2 and the display unit 3 and relay information communication between the vehicle control unit 2 and the display unit 3. That is, the vehicle information monitoring device 5 is arranged so as to function as a relay unit to relay information communication between the vehicle control unit 2 and the display unit 3. The vehicle information monitoring device 5 is not mounted on the vehicle 10 in normal use of the vehicle 10. That is, the vehicle information monitoring device 5 is connected between the vehicle control unit 2 and the display unit 3 when necessary. In this connected state, the vehicle information monitoring device 5 may be temporarily held in the vehicle 10, or may be placed at a place other than the vehicle 10. When the vehicle 10 is made to travel with the vehicle information monitoring device 5 connected, the vehicle information monitoring device 5 may be temporarily held on the vehicle 10, or the vehicle information monitoring device 5 may be held in a retainer (a bag, a belt, or the like) that an occupant carries with him/her.

The vehicle information monitoring device 5 has a first connecting portion 51 and a second connecting portion 52. The first connecting portion 51 is connected with the first connector 41 connected to the vehicle control unit 2 via the communication cable 25. The second connecting portion 52 is connected with the second connector 42 connected to the display unit 3 via the communication cable 35. More specifically, the first connecting portion 51 has a form of a connector capable of coupling with the first connector 41. The second connecting portion 52 similarly has a formof a connector capable of coupling with the second connector 42. The first connecting portion 51 is connected, via a communication cable 53, to a circuit board provided inside the casing of the vehicle information monitoring device 5. Similarly, the second connecting portion 52 is connected, via a communication cable 54, to a circuit board provided inside the casing of the vehicle information monitoring device 5.

The vehicle information monitoring device 5 includes a first communication interface 61, a second communication interface 62, a microcomputer 55, a third communication interface 63, a conversion rule memory 56, and a nonvolatile memory 58. The first communication interface 61 forms a first communication unit together with the first connecting portion 51 and the communication cable 53. The first communication interface 61 is a communication interface for communication with the vehicle control unit 2. The second communication interface 62 forms a second communication unit together with the second connecting portion 52 and the communication cable 54. The second communication interface 62 is a communication interface for communication with the display unit 3. The third communication interface 63 is a communication interface for communication with an external processor 70 (e.g. a personal computer incorporated with a predetermined tool).

The conversion rule memory 56 is a storage unit for temporarily storing a conversion rule received from the display unit 3. The nonvolatile memory 58 is a storage unit for storing response data (vehicle information) obtained from the vehicle control unit 2. With regard to vehicle information that needs to be converted into an actual physical quantity by use of a conversion rule, vehicle information after conversion is stored in the nonvolatile memory 58.

The microcomputer 55 is programmed so as to cause the first communication interface 61 to send out a request code received by the second communication interface 62 from the display unit 3 to the vehicle control unit 2. Moreover, the microcomputer 55 is programmed so as to cause the second communication interface 62 to send out a response code received by the first communication interface 61 from the vehicle control unit 2 to the display unit 3. Further, the microcomputer 55 is programmed so as to write a part or the whole of response data received from the vehicle control unit 2 by the first communication interface 61 in the nonvolatile memory 58 as it is or after converting based on a conversion rule. Still moreover, the microcomputer 55 is programmed so as to accept an output request for response data, from the external processor 70, via the third communication interface 63. Further, the microcomputer 55 is programmed so as to, in response to the output request, read storage data out of the nonvolatile memory 58, and send out the read-out data from the third communication interface 63. The microcomputer 55 may have an operation mode for outputting response data received by the second communication interface 62 from the third communication interface 63 in place of the storage data of the nonvolatile memory 58.

The microcomputer 55 is further programmed so as to transmit, from the first communication interface 61 to the vehicle control unit 2, a conversion rule request requesting transmission of a conversion rule. In addition, the microcomputer 55 is programmed so as to, when the first communication interface 61 receives a conversion rule from the vehicle control unit 2, store the conversion rule in the conversion rule memory 56. Still moreover, the microcomputer 55 is programmed so as to, when the first communication interface 61 receives response data, apply a conversion rule stored in the conversion rule memory 56 according to the type of vehicle information in the response data to convert the vehicle information.

The vehicle information monitoring device 5 is provided in, for example, a service center or the like for maintenance of the vehicle 10. That is, in a normal use state of the vehicle 10, the vehicle information monitoring device 5 is not mounted on the vehicle 10. That is, in a normal use state of the vehicle 10, the vehicle 10 has an electrical configuration as shown in FIG. 1. Therefore, the vehicle control unit 2 and the display unit 3 mutually perform information communication via the wired communication line 30.

When the vehicle 10 is taken in the service center or the like and it becomes necessary to obtain vehicle information in the vehicle control unit 2, the vehicle information monitoring device 5 is connected between the vehicle control unit 2 and the display unit 3 to reach the configuration shown in FIG. 2. By driving the vehicle 10 in this state, vehicle information can be obtained from the vehicle control unit 2 and stored in the nonvolatile memory 58. The vehicle information received from the vehicle control unit 2 and the vehicle information stored in the nonvolatile memory 58 can be taken out to the outside via the third communication interface 63. The nonvolatile memory 58 may be formed by a memory unit that can be detachably attached to the vehicle information monitoring device 5. A specific example of the memory unit is a flash memory unit represented by a memory card and a USB memory. In this case, the vehicle information monitoring device 5 includes a reader/writer unit for reading and writing data for the memory unit.

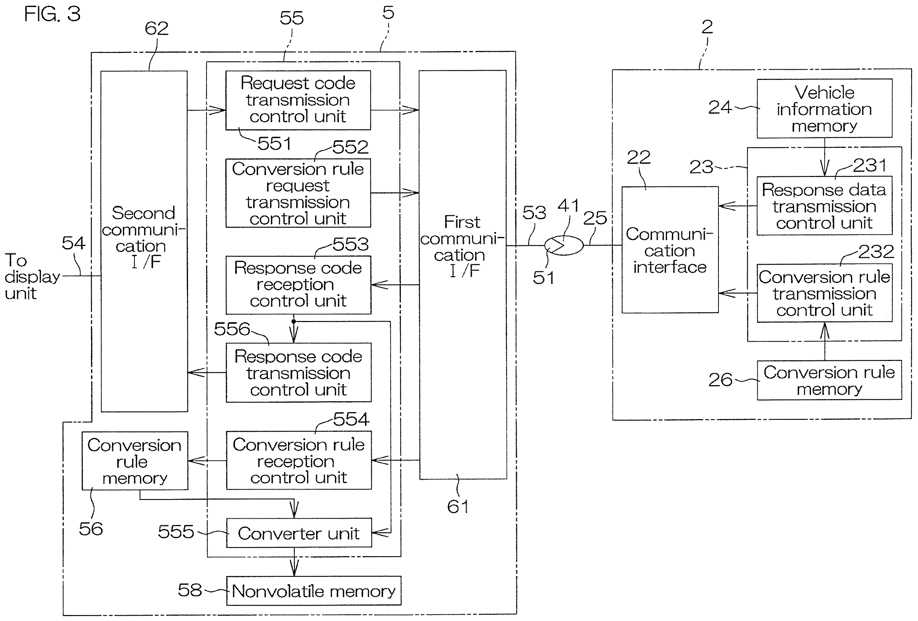

FIG. 3 is a block diagram for explaining a functional configuration of the principal parts of the vehicle control unit 2 and the vehicle information monitoring device 3.

The microcomputer 23 of the vehicle control unit 2 substantially includes a plurality of functional processing sections to be implemented by software processing. The functional processing sections include a response data transmission control unit 231 and a conversion rule transmission control unit 232. The response data transmission control unit 231 is arranged so as to, in response to a request code to request vehicle information being received by the communication interface 22, read vehicle information corresponding to the request code out of the vehicle information memory 24, and cause the communication interface 22 to transmit response data including the vehicle information. The conversion rule transmission control unit 232 is arranged so as to, in response to a conversion rule request requesting a conversion rule to convert vehicle information being received by the communication interface 22, read a conversion rule corresponding to the conversion rule request out of the conversion rule memory 26, and cause the communication interface 22 to transmit the conversion rule.

The microcomputer 55 of the vehicle information monitoring device 5 substantially includes a plurality of functional processing sections to be implemented by software processing. The functional processing sections include a request code transmission control unit 551, a conversion rule request transmission control unit 552 , a response code reception control unit 553, a conversion rule reception control unit 554, a converter unit 555, a response code transmission control unit 556. The request code transmission control unit 551 is arranged so as to, when the second communication interface 62 receives a request code, cause the first communication interface 61 to transmit a request code to request vehicle information. The conversion rule request transmission control unit 552 is arranged so as to cause the first communication interface 61 to transmit a conversion rule request requesting a conversion rule for vehicle information. The response code reception control unit 553 is arranged so as to receive by the first communication interface 61 a response code corresponding to the request code from the vehicle control unit 2. The conversion rule reception control unit 554 is arranged so as to receive by the first communication interface 61 a conversion rule corresponding to the conversion rule request from the vehicle control unit 2. The received conversion rule is stored in the conversion rule memory 56. The converter unit 555 is arranged so as to convert vehicle information included in a response code received by the response code reception control unit 553 in accordance with a conversion rule received by the conversion rule reception control unit 554 and stored in the conversion rule memory 56. The vehicle information after conversion is stored in the nonvolatile memory 58. The response code transmission control unit 556 is arranged so as to, when a response code is received by the response code reception control unit 553 , cause the second communication interface 62 to transmit a response code.

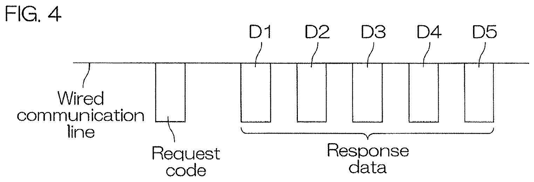

FIG. 4 is a view showing examples of data that appear on the wired communication line 30 in the normal use state (refer to FIG. 1) of the vehicle 10. The display unit 3 repeatedly sends out request codes to the wired communication line 3 at a predetermined period (e.g. 15.625msec). The request code may be 1 byte of data. The request code has a value determined according to information that needs to be obtained from the vehicle control unit 2. For example, by determining the value of the request code as "0x01," the request code serves as a request code to request coolant temperature data. In this case, the vehicle control unit 2 sends out coolant temperature data as response data.

The response data to be sent out to the wired communication line 30 by the vehicle control unit 2 in response to the request code consists of, for example, data D1, D2, D3, D4, and D5. Each of the data D1 to D5 is, for example, 1 byte of data. That is, the vehicle control unit 2 is arranged so as to send out 5 bytes of response data in response to one request code. In the present preferred embodiment, the data D1 indicates an engine speed, the data D2 indicates a vehicle speed, the data D3 indicates warning information, the data 4 indicates vehicle information (a coolant temperature or the like) according to the content of the request code, and the data D5 indicates checksum data of the data D1 to D4. The warning information is information indicating whether there is a fault and the fault type. The checksum data may be, for example, 8 low-order bits of an integrated value of the data D1 to D4.

of the 5 bytes of response data, first 3 bytes of data D1 to D3 are data that the vehicle control unit 2 sends out every time receiving a request code. That is, the engine speed, vehicle speed, and warning information are sent out to the wired communication line 30 irrespective of the content of the request code. This is first vehicle information with a high display priority in the display unit 3. Of the 5 bytes of response data, the fourth byte of data D4 includes second vehicle information that varies according to the content of the request code received by the vehicle control unit 2. The second vehicle information is information whose display priority in the display unit 3 is lower than that of the first vehicle information.

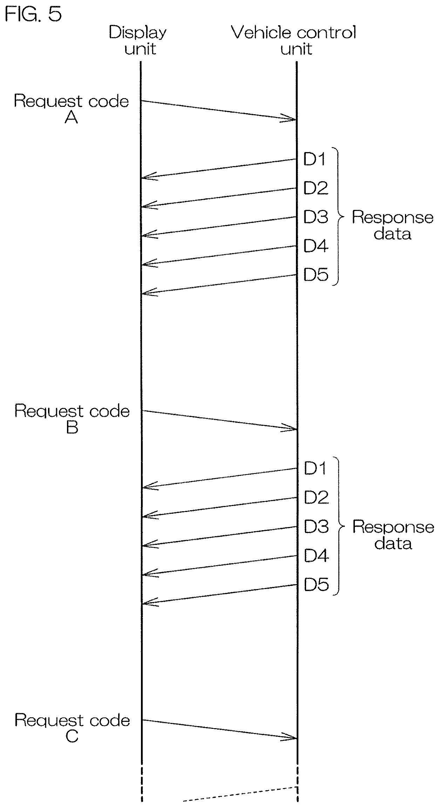

FIG. 5 is a view showing a communication timing between the display unit 3 and the vehicle control unit 2 in the normal use state (refer to FIG. 1) of the vehicle 10. The display unit 3 repeatedly sends out request codes A, B, and C sequentially at a predetermined fixed period (request code generating period). The vehicle control unit 2 having received the request codes A, B, and C sends out response data D1 to D5 each time of reception. The response data D1 to D5 are received by the display unit 3. It is structured so that sending out of the request codes from the display unit 3 and sending out of the response data D1 to D5 from the vehicle control unit 2 are completed within the request code generating period by the display unit 3.

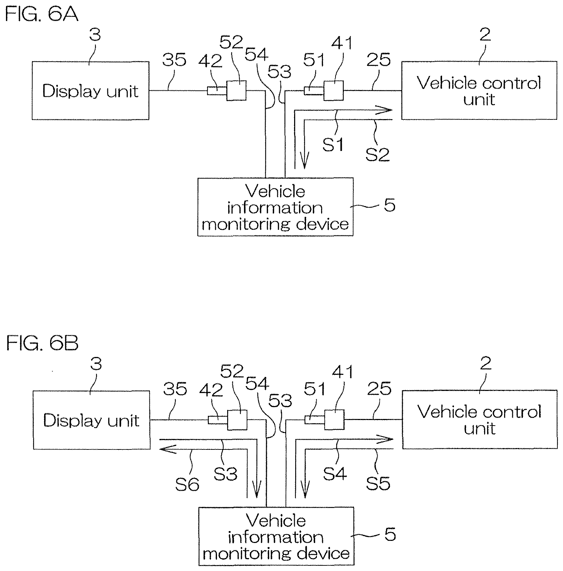

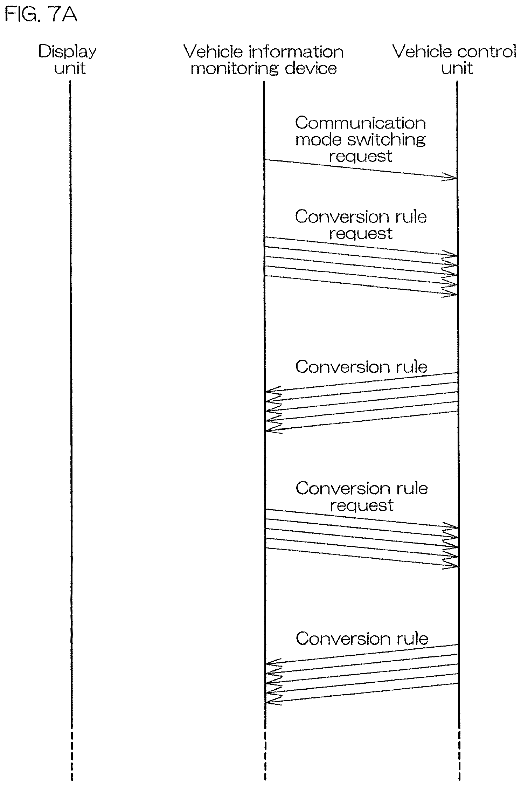

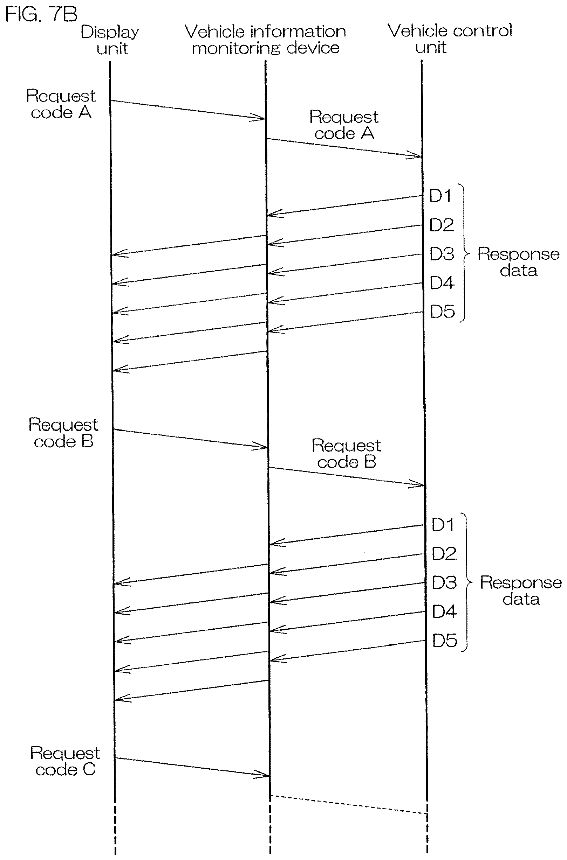

FIG. 6A and FIG. 6B are views for explaining communication procedures when the vehicle information monitoring device 5 is connected between the display unit 3 and the vehicle control unit 2 (refer to FIG. 2) . FIG. 7A and FIG. 7B are timing charts showing communication timings thereof.

First, referring to FIG. 6A and FIG. 7A, description will be given of exchange of conversion rule information immediately after a connection.

When the vehicle information monitoring device 5 and the vehicle control unit 2 are connected and both are powered on, the microcomputer 55 of the vehicle information monitoring device 5 sends out a communication mode switching request from the first communication interface 61 to the vehicle control unit 2 to request switching to a multiple-byte communication mode. The microcomputer 23 of the vehicle control unit 2, when the communication interface 22 receives the communication mode switching request, switches communication modes to a multiple-byte communication mode from a single-byte communication mode, which is a normal communication mode.

Then, the microcomputer 55 of the vehicle information monitoring device 5 transmits, from the first communication interface 61 to the vehicle control unit 2, a conversion rule request (S1 of FIG. 6A). The microcomputer 23 of the vehicle control unit 2, when the communication interface 22 receives the conversion rule request, reads a conversion rule out of the conversion rule memory 26, and transmits the read-out conversion rule from the communication interface 22 to the vehicle information monitoring device 5 (S2 of FIG. 6A). The microcomputer 55 of the vehicle information monitoring device 5, when the first communication interface 61 receives the conversion rule, stores the conversion rule in the conversion rule memory 56.

Conversion rules to be obtained from the vehicle control unit 2 include, for example, resolutions related to vehicle information indicating numerical values like an engine speed, a vehicle speed, a coolant temperature, etc. When all necessary conversion rules (e.g. resolutions) cannot be obtained by one time of communication, the microcomputer 55 of the vehicle information monitoring device 5 causes the first communication interface 61 to repeatedly send out a conversion rule request. Specifically, the microcomputer 55 may be arranged so as to identify the type (engine speed, vehicle speed, or the like) of vehicle information and cause the first communication interface 61 to send out a conversion rule request requesting a conversion rule for the identified vehicle information.

Thus, when the conversion rule exchanging operation ends and the vehicle information monitoring device 5 obtains a conversion rule from the vehicle control unit 2, the operator powers off the vehicle control unit 2. Specifically, the vehicle 10 with the vehicle control unit 2 mounted is powered off. Then, the operator again powers on the vehicle control unit 2 (more specifically, the vehicle 10). Accordingly, the communication mode of the vehicle control unit 2 returns to the normal communication mode (single-byte communication mode).

Referring to FIG. 6B and FIG. 7B, description will be given of an operation, after ending of the exchange of conversion rule information, of the vehicle information monitoring device 5 relaying communication between the vehicle control unit 2 and the display unit 3 while monitoring vehicle information. The display unit 3, as in the case of a normal use state, sends out request codes A, B, and C to the communication cable 35 at a predetermined period (e.g. 15.625msec) (S3 of FIG. 6B). The request code sent out by the display unit 3 is received by the vehicle information monitoring device 5. The vehicle information monitoring device 5 transmits the request code received from the display unit 3 to the vehicle control unit 2 via the communication cable 53 (S4 of FIG. 6B). The microcomputer 23 of the vehicle control unit 2, when the communication interface 22 receives the request code, transmits response data including vehicle information corresponding to the request code from the communication interface 22 (S5 of FIG. 6B). The vehicle information monitoring device 5 having received the response data transmits the response data from the communication cable 54 to the display unit 3 (S6 of FIG. 6B).

In the vehicle information monitoring device 5, when the first communication interface 61 receives response data from the vehicle control unit 2, the microcomputer 55 causes the second communication interface 62 to transmit the response data to the display unit 3. On the other hand, the microcomputer 55 stores the received response data in the nonvolatile memory 58. At that time, the microcomputer performs conversion on numerical data such as an engine speed and a vehicle speed among the vehicle information included in the response data based on conversion rules stored in the conversion rule memory 56, and writes the values after conversion in the nonvolatile memory 58.

In the display unit 3, when receiving response data, the microcomputer 33 performs display control of the meter display section 31 based on the response data. The microcomputer performs conversion on numerical data such as an engine speed and a vehicle speed among the vehicle information included in the response data based on conversion rules stored in the conversion rule memory 34 , and carries out display control of the meter display section 31 based on the values after conversion.

As a result of such operation being repeated, the vehicle information monitoring device 5 can relay communication between the vehicle control unit 2 and the display unit 3 and convert vehicle information according to necessity while accumulating the vehicle information in the nonvolatile memory 58.

As in the above, according to the present preferred embodiment, vehicle information can be obtained by connecting the vehicle information monitoring device 5 halfway on the wired communication line 30 between the vehicle control unit 2 and the display unit 3. Therefore, it is not necessary that the vehicle control unit 2 includes a dedicated port or interface for monitoring vehicle information. For example, there is a strict limit to the size of a vehicle control unit of a saddle type vehicle such as a two-wheeled motor vehicle because of limitation in mounting space. For this reason, there is no allowance for including a dedicated communication port for a fault diagnosis etc. According to the present preferred embodiment, as a result of being able to use the communication port for the display unit 3 also for a fault diagnosis etc., an increase in size of the vehicle control unit 2 can be avoided, while a fault diagnosis function can be added.

Moreover,the vehicleinformation monitoring device 5 is arranged so as to relay information communication between the display unit 3 and the vehicle control unit 2, and thus can obtain vehicle information in a state where information communication between the display unit 3 and the vehicle control unit 2 is being performed. Therefore, vehicle information can be obtained in a driving state of the vehicle 10. Accordingly, various vehicle information generated in the driving state of the vehicle 10 can be obtained, so that a wide variety of vehicle information can be obtained. Consequently, appropriate maintenance work can be carried out based on the obtained vehicle information.

Further, the vehicle control unit 2 is arranged so as to respond to a conversion rule request requesting a conversion rule to convert vehicle information. That is, when a conversion rule request is received by the communication interface 22 of the vehicle control unit 2, a conversion rule corresponding to the request is transmitted from the communication interface 22. Therefore, the vehicle information monitoring device 5 can obtain a conversion rule by providing a conversion rule request to the vehicle control unit 2, and further, by providing a request code to the vehicle control unit 2, can obtain vehicle information included in a response code from the vehicle control unit 2. Hence the vehicle information monitoring device 5 can convert vehicle information by a correct conversion rule. Because of being able to obtain a conversion rule from the vehicle control unit 2, it is not necessary for the vehicle information monitoring device 5 to have in advance a conversion rule to be used by the vehicle control unit 2. Hence, even when a plurality of vehicle control units 2 mounted on different types of vehicles respectively output vehicle information different in conversion rules, it is not necessary for the vehicle information monitoring device 5 to include a conversion rule table that stores type-by-type conversion rules of vehicles, and of course, it is not necessary to update the conversion rule table. That is, vehicle information output by the vehicle control units 2 of a plurality of types of vehicles can be monitored by the vehicle information monitoring device 5 of the same specifications.

The prior art described in the foregoing JP '642 is on the assumption that a physical quantity conversion formula to convert a parameter provided from an engine controller into an actual physical quantity is predetermined for each type of parameter. Therefore, if there are a plurality of types of vehicles where different physical quantity conversion formulas should be used for the same type of parameter, the physical quantity conversion formulas different for each type of vehicle must be prepared, and then stored in memory cartridges provided for each type of vehicle. Hence, for coping with a plurality of types of vehicles, it is necessary to develop many types of memory cartridges and manufacture the same, and the costs increase accordingly.

As a specific example, suppose that there are a plurality of types of vehicles different in the maximum engine speed, and in a vehicle of each type, a system for transmitting engine speed information at a fixed information rate (e.g. 1 byte) from a vehicle control unit to a display unit. In this case, by making the maximum rotation speed correspond to the maximum value of engine speed data for each type of vehicle, the dynamic range of the engine speed data is maximized, so that a detailed engine speed display is enabled. However, because the resolution of engine speed data is different for each type of vehicle, an actual engine speed cannot be calculated when the same physical quantity conversion formula is applied. Therefore, in the case of applying the prior art of JP '642, it is necessary to develop and manufacture a plurality of memory cartridges corresponding to a plurality of types of vehicles different in resolution beforehand. Even if a memory cartridge that stores aplurality of physical quantity conversion formulas corresponding to a plurality of models of vehicles is prepared, it cannot cope with new types of vehicles to be provided on the market after development of the memory cartridge. Therefore, it is necessary to repeatedly develop memory cartridges.

The present preferred embodiment also provides a solution for such problems.

Moreover, in the present preferred embodiment, the vehicle control unit 2 and the display unit 3 are arranged so as to be able to be connected by the wired communication line 30 having halfway the first connector 41 and the second connector 42 that can couple with each other. The vehicle information monitoring device 5 has the first connecting portion 51 and the second connecting portion 52 that can be connected to the first connector 41 and the second connector 42, respectively, and the first connecting portion 51 and the second connecting portion 52 are connected to the first and second communication interfaces 61 and 62, respectively. Accordingly, in a normal use state of the vehicle, the first connector 41 and the second connector 42 are coupled, and the vehicle control unit 2 and the display unit 3 carry out information communication directly. When obtaining vehicle information, coupling between the first connector 41 and the second connector 42 is released, and the first connector 41 and the second connector 42 are connected to the first connecting portion 51 and the second connecting portion 52 of the vehicle information monitoring device 5, respectively. Accordingly, the vehicle control unit 2 and the display unit 3 can be relayed by the vehicle information monitoring device 5 while communicating with each other. In other words, the vehicle information monitoring device 5 respectively communicates with the vehicle control unit 2 and the display unit 3. By thus releasing coupling between the first connector 41 and the second connector 42 and connecting the first and second connectors 41 and 42 to the vehicle information monitoring device 5, vehicle information can be easily obtained. In a normal use state, because it is not necessary to keep the vehicle information monitoring device 5 connected, it is not necessary to secure a space to place the vehicle information monitoring device in the vehicle.

The "halfway on the wired communication line" means any position from one end to the other end of the wired communication line. That is, an intermediate portion, a one-end portion, and an other-end portion of a wired communication line are all covered by the "halfway on the wired communication line."

Although a preferred embodiment of the present invention has been described above, the present invention can also be embodied in other modes. For example, in the foregoing embodiment, the resolution being a conversion parameter has been mentioned as an example of the conversion rule, but the vehicle control unit 2 may transmit a conversion rule specifying code to specify a conversion rule like a resolution specifying code to specify a resolution and a conversion formula specifying code to specify a conversion formula as a "conversion rule." The resolution specifying code is a code (e.g. a number), for which a plurality of types of selectable resolutions are predetermined, for selecting and specifying one of the predetermined resolutions. Similarly, the conversion formula specifying code is a code (e.g. a number), for which a plurality of types of selectable conversion formulas are predetermined, for selecting and specifying one of the predetermined conversion formulas.

Moreover, in the foregoing embodiment, the connecting portions by the first connector 41 and the second connector 42 are provided at an intermediate portion of the wired communication line 30, but similar connecting portion (s) may be provided at one or both of the opposite ends of the wired communication line 30. For example, a connector with a communication cable that is a component of the wired communication line 30 may be provided on the display unit 3. It suffices to connect the connector to the second connecting portion 52 of the vehicle information monitoring device 5 and connect the communication cable to the first connecting portion 51 of the vehicle information monitoring device 5. Of course, a similar connector may be provided on the vehicle control unit 2.

Further, in the foregoing embodiment, the configuration of the vehicle information monitoring device 5 relaying communication between the vehicle control unit 2 and the display unit 3 has been mentioned, but the vehicle control unit 2 and meters do not perform communication depending on the vehicle. Even in such a case, by connecting the vehicle information monitoring device 5 to the communication port of the vehicle control unit 2, vehicle information can be obtained. That is, it is not necessary for the vehicle information monitoring device 5 to relay communication between the display unit 3 and the vehicle control unit 2.

Moreover, the vehicle information monitoring device 5 may be arranged so that a display device for displaying vehicle information etc., can be connected. The display device may be arranged so as to be capable of displaying vehicle information stored in the nonvolatile memory 58.

Further, the vehicle information monitoring device 5 of the preferred embodiment includes the nonvolatile memory 58, but the nonvolatile memory 58 may be omitted. In this case, the microcomputer 55 operates, for example, so as to output response data received by the first communication interface 61 from the third communication interface 63 to the external processor 70. Accordingly, vehicle information (log data) can be accumulated in the external processor 70.

Moreover, in place of the nonvolatile memory 58, a hard disk drive may be used, or a volatile memory (DRAM) with a backup power supply may be used.

Further, in the foregoing embodiments, A vehicle control method for communication of a communication unit (22) with an external communication target is disclosed that comprises the steps of:
transmitting response data including vehicle information corresponding to a request code from the communication unit (22) in response to the request code to request vehicle information being received by the communication unit (22), requesting a conversion rule to convert vehicle information being received by the communication unit (22) in response to a conversion rule request, and transmitting a conversion rule corresponding to the conversion rule request from the communication unit (22). Said vehicle control method further comprising: displaying the vehicle information. Said vehicle control method further comprises:
   transmitting a request code to request vehicle information, transmitting a conversion rule request requesting a conversion rule for vehicle information,
   receiving a response code corresponding to the request code,
   receiving a conversion rule corresponding to the conversion rule request, and
   converting vehicle information included in the received response code in accordance with the received conversion rule.

## Claims

1. A vehicle control device (2) comprising:
a communication unit (22) for communication with an external communication target;
a response data transmission control unit (231) that, in response to a request code to request vehicle information being received by the communication unit (22), transmits response data including vehicle information corresponding to the request code from the communication unit (22); and **characterized in that** it comprises a conversion rule transmission control unit (232) that, in response to a conversion rule request requesting a conversion rule to convert vehicle information being received by the communication unit (22), transmits a conversion rule corresponding to the conversion rule request from the communication unit (22).

2. A vehicle control device (2) according to claim 1, wherein the communication unit includes a communication port (22) for communicating with a vehicle information display device (3) that displays vehicle information.

3. A vehicle information monitoring device (5) for obtaining vehicle information from the vehicle control device (2) according to claim 1 or 2, comprising:
a first communication unit (61, 51, 53) that communicates with the communication unit (22) of the vehicle control device (2);
a request code transmission control unit (551) that causes the first communication unit (61, 51, 53) to transmit a request code to request vehicle information;
a conversion rule request transmission control unit (552) that causes the first communication unit (61, 51, 53) to transmit a conversion rule request requesting a conversion rule for vehicle information;
a response code reception control unit (553) that receives from the vehicle control device (2) a response code corresponding to the request code by the first communication unit (61, 51, 53);
a conversion rule reception control unit (554) that receives from the vehicle control device (2) a conversion rule corresponding to the conversion rule request by the first communication unit (61, 51, 53); and
a converter unit (555) that converts vehicle information included in a response code received by the response code reception control unit (553) in accordance with a conversion rule received by the conversion rule reception control unit (554).

4. A vehicle information monitoring device (5) according to claim 3, further comprising:
a second communication unit (62, 52, 54) that communicates with a vehicle information display device (3) for displaying vehicle information by communicating with the communication unit (22) of the vehicle control device (2); and
a response code transmission control unit (556) that causes the second communication unit (62, 52, 54) to transmit a response code when a response code is received by the response code reception control unit (553),
wherein
the request code transmission control unit (556) causes the first communication unit (61, 51, 53) to transmit a request code when the second communication unit (62, 52, 54) receives a request code.

5. A vehicle information monitoring system comprising:
the vehicle control device (2) according to claim 1 or 2; and
the vehicle information monitoring device (5) according to claim 3 or 4.

6. A vehicle information monitoring system comprising:
the vehicle control device (2) according to claim 1 or 2;
the vehicle information monitoring device (5) according to claim 4; and
a vehicle information display device (3) that communicates with the second communication unit (62, 52, 54).

7. A vehicle information monitoring system according to claim 6, wherein the vehicle control device (2) and the vehicle information display device (3) can be connected by a wired communication line (30) having a first connector (41) and a second connector (42) that can couple with each other halfway between the vehicle control device (2) and the vehicle information display device(3),
the first connector (41) is connected to the vehicle control device (2), and the second connector (42) is connected to the vehicle information display device (3), and
the first communication unit (61, 51, 53) includes a first connecting portion (51) to be connected to the first connector (41), and the second communication unit (62, 52, 54) includes a second connecting portion (52) to be connected to the second connector (42).

8. A vehicle information monitoring system according to claim 7, wherein the vehicle information monitoring device (5) relays a request code and response data between the vehicle control device (2) and the vehicle information display device (3).

9. A vehicle control method for communication of a communication unit (22) with an external communication target comprising the steps of:
transmitting response data including vehicle information corresponding to a request code from the communication unit (22) in response to the request code to request vehicle information being received by the communication unit (22),
requesting a conversion rule to convert vehicle information being received by the communication unit (22) in response to a conversion rule request, and transmitting a conversion rule corresponding to the conversion rule request from the communication unit (22).

10. A vehicle control method according to claim 9, further comprising: displaying the vehicle information.

11. A vehicle control method according to claim 9 or 10, further comprising
transmitting a request code to request vehicle information,
transmitting a conversion rule request requesting a conversion rule for vehicle information,
receiving a response code corresponding to the request code,
receiving a conversion rule corresponding to the conversion rule request, and
converting vehicle information included in the received response code in accordance with the received conversion rule.

## Patentansprüche

1. Eine Fahrzeug-Steuervorrichtung (2) die umfasst:
eine Kommunikationseinheit (22) zur Kommunikation mit einem externen Kommunikations-Ziel;
eine Erwiderungs-Datenübertragungs-Steuereinheit (231), welche in Erwiderung auf einen Anforderungs-Code, um Fahrzeuginformationen anzufordern, die durch die Kommunikationseinheit (22) empfangen werden, Erwiderungs-Daten überträgt,
welche Fahrzeuginformationen, entsprechend zu dem Anforderungs-Code von der Kommunikationseinheit (22), beinhalten; und **dadurch gekennzeichnet, dass** diese eine Umwandlungs-Regel-Übertragungs-Steuereinheit (232) umfasst, welche in Erwiderung zu einer Umwandlungs-Regel-Anforderung, die eine Umwandlungs-Regel zur Umwandlung von Fahrzeuginformationen, die durch die Kommunikationseinheit (22) empfangen sind, anfordert, eine Umwandlungs-Regel entsprechend zu der Umwandlungs-Regel-Anforderung von der Kommunikationseinheit (22) überträgt.

2. Eine Fahrzeug-Steuervorrichtung (2) gemäß Anspruch 1, wobei die Kommunikationseinheit einen Kommunikationsanschluss (22) zur Kommunikation mit einer Fahrzeuginformations-Anzeigevorrichtung (3) beinhaltet, welche Fahrzeuginformationen anzeigt.

3. Eine Fahrzeuginformations-Überwachungsvorrichtung (5) zum Erhalten von Fahrzeuginformationen von der Fahrzeug-Steuervorrichtung (2) gemäß Anspruch 1 oder 2 die umfasst:
eine erste Kommunikationseinheit (61, 51, 53), welche mit der Kommunikationseinheit (22) der Fahrzeug-Steuervorrichtung (2) kommuniziert;
eine Anforderungs-Code-Übertragungs-Steuereinheit (551), welche die erste Kommunikationseinheit (61, 51, 53) veranlasst, einen Anforderungs-Code zu übertragen, um Fahrzeuginformationen anzufordern;
eine Umwandlungs-Regel-Anforderungs-Übertragungs-Steuereinheit (552), welche die erste Kommunikationseinheit (61, 51, 53) veranlasst, eine Umwandlungs-Regel-Anforderung zu übertragen, die eine Umwandlungs-Regel für Fahrzeuginformationen anfordert;
eine Erwiderungs-Code-Empfangs-Steuereinheit (553), die von der Fahrzeug-Steuervorrichtung (2) einen Erwiderungs-Code, entsprechend zu dem Anforderungs-Code durch die erste Kommunikationseinheit (61, 51, 53) empfängt;
eine Umwandlungs-Regel-Empfangs-Steuereinheit (554), die von der Fahrzeug-Steuervorrichtung (2) eine Umwandlungs-Regel entsprechend zu der Umwandlungs-Regel-Anforderung durch die erste Kommunikationseinheit (61, 51, 53) empfängt;
und
eine Umwandlungseinheit (555), welche Fahrzeuginformationen umwandelt, die in einem Erwiderungs-Code beinhaltet sind, der durch die Erwiderungs-Code-Empfangs-Steuereinheit (553) in Übereinstimmung mit einer Umwandlungs-Regel, die durch die Umwandlungs-Regel-Empfangs-Steuereinheit (554) empfangen ist.

4. Eine Fahrzeuginformations-Überwachungsvorrichtung (5) gemäß Anspruch 3 die weiterhin umfasst:
eine zweite Kommunikationseinheit (62, 52, 54), die mit einer Fahrzeuginformations-Anzeigevorrichtung (3) kommuniziert, zum Anzeigen von Fahrzeuginformationen durch Kommunikation mit der Kommunikationseinheit (22) der Fahrzeug-Steuervorrichtung (2); und
eine Erwiderungs-Code-Übertragungs-Steuereinheit (556), welche die zweite Kommunikationseinheit (62, 53, 54) veranlasst, einen Erwiderungs-Code zu übertragen, wenn ein Erwiderungs-Code durch die Erwiderungs-Code-Empfangs-Steuereinheit (553) empfangen ist, wobei
die Anforderungs-Code-Übertragungs-Steuereinheit (556) die erste Kommunikationseinheit (61, 51, 53) veranlasst, einen Anforderungs-Code zu übertragen, wenn die zweite Kommunikationseinheit (62, 52, 54) einen Anforderungs-Code empfängt.

5. Ein Fahrzeuginformations-Überwachungs-System, das umfasst, die Fahrzeug-Steuervorrichtung (2) gemäß Anspruch 1 oder 2; und
die Fahrzeuginformations-Überwachungsvorrichtung (5) gemäß Anspruch 3 oder 4.

6. Ein Fahrzeuginformations-Überwachungs-System, das umfasst:
die Fahrzeug-Steuervorrichtung (2) gemäß Anspruch 1 oder 2;
die Fahrzeuginformations-Überwachungsvorrichtung (5) gemäß Anspruch 4; und
eine Fahrzeuginformations-Anzeigevorrichtung (3), welche mit der zweiten Kommunikationseinheit (62, 52, 54) kommuniziert.

7. Ein Fahrzeuginformations-Überwachungs-System gemäß Anspruch 6, wobei die Fahrzeug-Steuervorrichtung (2) und die Fahrzeuginformations-Anzeigevorrichtung (3) durch eine Kabel-Kommunikations-Leitung (30) verbunden werden kann, welche einen ersten Verbinder (41) und einen zweiten Verbinder (42) hat, die mit einander auf halbem Weg zwischen der Fahrzeug-Steuervorrichtung (2) und der Fahrzeuginformations-Anzeigevorrichtung (3) gekoppelt werden können,
der erste Verbinder (41) ist mit der Fahrzeug-Steuervorrichtung (2) verbunden und der zweite Verbinder (42) ist mit der Fahrzeuginformations-Anzeigevorrichtung (3) verbunden, und
die erste Kommunikationseinheit (61, 51, 53) beinhaltet einen ersten Verbindungsabschnitt (51), der mit dem ersten Verbinder (41) zu verbinden ist, und die zweite Kommunikationseinheit (62, 52, 54) beinhaltet einen zweiten Verbindungsabschnitt (52), der mit dem zweiten Verbinder (42) zu verbinden ist.

8. Ein Fahrzeuginformations-Überwachungs-System gemäß Anspruch 7, wobei die Fahrzeuginformations-Überwachungsvorrichtung (5) einen Anforderungs-Code und Erwiderungs-Daten zwischen der Fahrzeug-Steuervorrichtung (2) und der Fahrzeuginformations-Anzeigevorrichtung (3) durchschaltet.

9. Ein Fahrzeug-Steuerverfahren zur Kommunikation einer Kommunikationseinheit (22) mit einem externen Kommunikations-Ziel, welches die Schritte umfasst:
Übertragen von Erwiderungs-Daten, welche Fahrzeuginformationen entsprechend zu einem Anforderungs-Code von der Kommunikationseinheit (22) beinhalten, in Erwiderung auf den Anforderungs-Code, um Fahrzeuginformationen, die durch die Kommunikationseinheit (22) empfangen sind, anzufordern,
Anfordern einer Umwandlungs-Regel, um Fahrzeuginformationen, die durch die Kommunikationseinheit (22) empfangen sind, in Erwiderung auf eine Umwandlungs-Regel-Anforderung, umzuwandeln, und
Übertragen einer Umwandlungs-Regel entsprechend zu der Umwandlungs-Regel-Anforderung von der Kommunikationseinheit (22).

10. Ein Fahrzeug-Steuerverfahren gemäß Anspruch 9, das weiterhin umfasst: Anzeigen der Fahrzeuginformationen.

11. Ein Fahrzeug-Steuerverfahren gemäß Anspruch 9 oder 10, das weiterhin umfasst:
Übertragen eines Anforderungs-Codes, um Fahrzeuginformationen anzufordern,
Übertragen einer Umwandlungs-Regel-Anforderung, die eine Umwandlungs-Regel für Fahrzeuginformationen anfordert,
Empfangen eines Erwiderungs-Codes entsprechend zu dem Anforderungs-Code, Empfangen einer Umwandlungs-Regel entsprechend zu der Umwandlungs-Regel-Anforderung, und
Umwandeln von Fahrzeuginformationen, die in dem empfangenen Erwiderungs-Code beinhaltet sind, in Übereinstimmung mit der empfangenen Umwandlungs-Regel.

## Revendications

1. Dispositif de commande de véhicule (2) comprenant :
une unité de communication (22) destinée à une communication avec une cible de communication extérieure,
une unité de commande de transmission de données de réponse (231) qui, en réponse à un code de demande requérant des informations sur le véhicule reçues par l'unité de communication (22), transmet des données de réponse incluant les informations sur le véhicule correspondant au code demandé provenant de l'unité de communication (22) et **caractérisé en ce qu'**il comprend :
une unité de commande de transmission de règle de conversion (232) qui, en réponse à une demande de règle de conversion requérant une règle de conversion permettant de convertir les informations sur le véhicule reçues par l'unité de communication (22), transmet une règle de conversion correspondant à la demande de règle de conversion à partir de l'unité de communication (22).

2. Dispositif de commande de véhicule (2) selon la revendication 1, dans lequel l'unité de communication inclut un port de communication (22) permettant de communiquer avec un dispositif d'affichage d'informations de véhicule (3) qui affiche des informations sur le véhicule.

3. Dispositif de surveillance d'informations de véhicule (5) destiné à récupérer des informations sur le véhicule provenant du dispositif de commande de véhicule (2) conforme à la revendication 1 ou à la revendication 2, comprenant :
une première unité de communication (61, 51, 53) qui communique avec l'unité de communication (22) du dispositif de commande de véhicule (2),
une unité de commande de transmission de code de demande, qui amène la première unité de communication (61, 51, 53) à transmettre un code de demande permettant de requérir les informations sur le véhicule,
une unité de commande de transmission de demande de règle de conversion (552) qui amène la première unité de communication (61, 51, 53) à transmettre une demande de règle de conversion requérant une règle de conversion pour des informations sur le véhicule,
une unité de commande de réception de code de réponse (553) qui reçoit en provenance du dispositif de commande de véhicule (2) une règle de conversion correspondant à la règle de conversion demandée par la première unité de communication (61, 51, 53), et
une unité de convertisseur (555) qui convertit les informations sur le véhicule incluses dans un code de réponse reçu par l'unité de commande de réception de code de réponse (553) en fonction de la règle de conversion reçue par l'unité de commande de réception de règle de conversion (554).

4. Dispositif de surveillance d'informations de véhicule (5) selon la revendication 3, comprenant en outre :
une seconde unité de communication (62, 52, 54) qui communique avec le dispositif d'affichage d'informations de véhicule (3) afin d'afficher des informations sur le véhicule en communiquant avec l'unité de communication (22) du dispositif de commande de véhicule (2), et
une unité de commande de transmission de code de réponse (556) qui amène la seconde unité de communication (62, 52, 54) à transmettre un code de réponse lorsque le code de réponse est reçu par l'unité de commande de réception de codes de réponse (553), dans lequel
l'unité de commande de transmission de code de réponse (556) amène la première unité de communication (61, 51, 53) à transmettre un code de demande lorsque la seconde unité de communication (62, 52, 54) reçoit un code de demande.

5. Système de surveillance d'informations de véhicule comprenant :
le dispositif de commande de véhicule (2) conforme à la revendication 1 ou à la revendication 2, et
le dispositif de surveillance d'informations de véhicule (5) conforme à la revendication 3 ou à la revendication 4.

6. Système de surveillance d'informations de véhicule comprenant :
le dispositif de commande de véhicule (2) conforme à la revendication 1 ou à la revendication 2,
le dispositif de surveillance d'informations de véhicule (5) conforme à la revendication 4, et
un dispositif d'affichage d'informations de véhicule (3) qui communique avec la seconde unité de communication (62, 52, 54).

7. Système de surveillance d'informations de véhicule selon la revendication 6, dans lequel le dispositif de commande de véhicule (2) et le dispositif d'affichage d'informations de véhicule (3) peuvent être reliés par une ligne de communication câblée (30) comportant un premier connecteur (41) et un second connecteur (42) qui peuvent s'accoupler l'un à l'autre à mi distance entre le dispositif de commande de véhicule (2) et le dispositif d'affichage d'informations de véhicule (3),
le premier connecteur (41) est relié au dispositif de commande de véhicule (2) et le second connecteur (40) est relié au dispositif d'affichage d'informations de véhicule (3), et
la première unité de communication (61, 51, 53) inclut un premier organe de connexion (51) à relier au premier connecteur (41) et la seconde unité de communication (62, 52, 54) inclut un second organe de connexion (52) à relier au second connecteur (42).

8. Système de surveillance d'informations de véhicule selon la revendication 7, dans lequel le dispositif de surveillance d'informations de véhicule (5) relaye un code de demande et des données de réponse entre le dispositif de commande de véhicule (2) et le dispositif d'affichage d'informations de véhicule (3).

9. Procédé de commande de véhicule en vue d'une communication entre une unité de communication (22) et une cible de communication cible, comprenant les étapes suivantes :
la transmission de données de réponse incluant des informations sur le véhicule correspondant à un code de demande provenant de l'unité de communication (22) en réponse au code de demande permettant de requérir les informations sur le véhicule reçues par l'unité de communication (22),
la demande d'une règle de conversion permettant de convertir les informations sur le véhicule reçues par l'unité de communication (22) en réponse à une demande de règle de conversion, et
la transmission d'une règle de conversion correspondant à la règle de conversion requise par l'unité de communication (22).

10. Procédé de commande de véhicule selon la revendication 9, comprenant en outre : l'affichage des informations sur le véhicule.

11. Procédé de commande de véhicule selon la revendication 9 ou la revendication 10, comprenant en outre :
la transmission d'un code de demande pour requérir des informations sur le véhicule,
la transmission d'une demande de règle de conversion requérant une règle de conversion pour les informations sur le véhicule,
la réception d'un code de réponse correspondant au code de demande,
la réception d'une règle de conversion correspondant à la demande de règle de conversion, et
la conversion des informations sur le véhicule incluses dans le code de réponse reçu en fonction de la règle de conversion reçue.
